# EUROPÄISCHE PATENTSCHRIFT

(11) **EP 3 055 179 B1**
(45) Veröffentlichungstag und Bekanntmachung des Hinweises auf die Patenterteilung: **30.08.2017**
(21) Anmeldenummer: 14781866.0
(22) Anmeldetag: 07.10.2014
(51) Int. Cl.: B60W 40/076, B60W 50/00, G06K 9/46

(54) **VERFAHREN ZUM ERMITTELN EINER RELATIVEN FAHRBAHNSTEIGUNG**
METHOD FOR DETERMINING A RELATIVE GRADIENT OF A ROADWAY
PROCÉDÉ DE DÉTERMINATION DE LA PENTE RELATIVE D'UNE CHAUSSÉE

(30) Priorität: 08.10.2013 DE 102013220303
(43) Veröffentlichungstag der Anmeldung: 17.08.2016
(73) Patentinhaber: Ford Global Technologies, LLC, Dearborn, MI 48126 (US)
(72) Erfinder: ARNDT, Christoph, 57583 Mörlen (DE); GUSSEN, Uwe, 52393 Hürtgenwald (DE); STEFAN, Frederic, 52072 Aachen (DE)
(74) Vertreter: Dörfler, Thomas
(86) Internationale Anmeldenummer: PCT/EP2014/071393
(87) Internationale Veröffentlichungsnummer: WO 2015/052158

(56) Entgegenhaltungen:
- EP-A1- 2 051 206
- WO-A1-2013/141226
- US-A1- 2006 161 331

## Beschreibung

Die Erfindung betrifft ein Verfahren zum Ermitteln der Steigung einer in einiger Entfernung vor einem Kraftfahrzeug liegenden Fahrbahn relativ zu dem gerade von dem Kraftfahrzeug befahrenen Fahrbahnstück, wobei Bilder der vor dem Kraftfahrzeug liegenden Fahrbahn mittels einer Kamera aufgenommen werden, in den aufgenommenen Bildern Fahrbahnverlaufslinien vor dem Kraftfahrzeug erkannt werden und anhand von Richtungsunterschieden der Fahrbahnverlaufslinien in unterschiedlichen Entfernungen die relative Steigung berechnet wird, sowie eine zur Durchführung des Verfahrens eingerichtete Vorrichtung gemäß den Oberbegriffen der unabhängigen Patentansprüche.

Um derzeitige und zukünftige Anforderungen an den Kraftstoffverbrauch und Schadstoffausstoß von Kraftfahrzeugen mit Verbrennungsmotor bzw. entsprechende Anforderungen an den Energieverbrauch von Elektrofahrzeugen erfüllen zu können, kombiniert man eine Vielzahl von Techniken, zu denen auch die Ermittlung von relativen und absoluten Fahrbahnsteigungen gehört, um die Fahrstrategie wie z.B. die von einem Abstandsregeltempomaten gehaltene Entfernung zu einem vorausfahrenden Fahrzeug vorausschauend an die Fahrbahnsteigung anpassen zu können.

Die Kenntnis der relativen Fahrbahnsteigung kann auch dazu dienen, andere Fahrzeugparameter - wie z.B. die Ausrichtung der Fahrzeugscheinwerfer - automatisch an den Fahrbahnverlauf anzupassen.

Fahrbahnsteigungen können mit einem Navigationssystem aus Kartendaten gewonnen werden, jedoch sind Kartendaten, die Fahrbahnsteigungen enthalten, nicht für alle Straßen verfügbar, und wenn sie verfügbar sind, sind diese häufig nicht sehr genau.

Alternative oder ergänzende Verfahren zum Ermitteln von relativen Fahrbahnsteigungen können Bilder der vor dem Kraftfahrzeug liegenden Fahrbahn auswerten, die mit einer Kamera im oder am Kraftfahrzeug aufgenommen werden. Ein derartiges Verfahren mit den Merkmalen des Oberbegriffs des Patentanspruchs 1 ist aus der EP 2 051 206 B1 bekannt. Hierin werden lediglich Richtungsunterschiede der Fahrbahnmarkierungen in zwei unterschiedlichen Entfernungen betrachtet, einmal relativ nahe am Kraftfahrzeug und einmal in größtmöglicher Entfernung. Dadurch ist dieses Verfahren sehr fehleranfällig. Weiterer Stand der Technik wird durch WO 2013/141226 A1 und US 2006/161331 A1 offenbart.

Entfernungen anhand von Kamerabildern, zu ermitteln, ist schon als solches nicht sehr genau. Alterativ oder ergänzend kann man Entfernungen auch per Radar oder Lidar bestimmen, doch ist der Aufwand dafür beträchtlich.

Der Erfindung liegt die Aufgabe zu Grunde, ein robustes und genaues Verfahren zum Ermitteln einer relativen Fahrbahnsteigung bereitzustellen, das mit der Auswertung von Kamerabildern auskommt.

Diese Aufgabe wird durch ein Verfahren und eine Vorrichtung gemäß den Oberbegriffen der unabhängigen Patentansprüche gelöst.

Vorteilhafte Weiterbildungen der Erfindung sind in den abhängigen Patentansprüchen angegeben.

Gemäß der Erfindung werden die erkannten Fahrbahnverlaufslinien jeweils in ihrer Gesamtheit, in der sie normalerweise gerade oder gekrümmte kontinuierliche Linien ohne Knicke bilden, nichtlinear zu einem Horizont der in einiger Entfernung vor dem Kraftfahrzeug liegenden Fahrbahn interpoliert. Es wird der Abstand zwischen dem so erhaltenen Horizont des Fahrbahnverlaufs und einem Horizont des gerade befahrenen Fahrbahnstücks berechnet, und aus dem Abstand der beiden Horizonte voneinander ergibt sich direkt die relative Steigung.

In einer bevorzugten Ausführungsform wird der Horizont des gerade befahrenen Fahrbahnstücks erhalten, indem die Fahrbahnverlaufslinien linear interpoliert werden. Dies hat den Vorteil, dass in diesem Fall der Abstand der beiden Horizonte voneinander und damit die relative Steigung unabhängig von der aktuellen Neigung des Kraftfahrzeugs ist.

Die lineare Interpolation der Fahrbahnverlaufslinien ist vorzugsweise eine Geradenerkennung mittels Hough-Transformation oder Radon-Transformation.

Alternativ zu einem durch lineare Interpolation erhaltenen Horizont des gerade befahrenen Fahrbahnstücks kann auch ein durch die Montageposition und Kalibrierung der Kamera festgelegter Horizont verwendet werden, erforderlichenfalls nach einer Korrektur unter Berücksichtigung der aktuellen Neigung des Kraftfahrzeug, die mit anderen Sensoren als Kameras ermittelt werden kann und/oder aus Kartendaten in einem Fahrzeugnavigationssystem ermittelt werden kann.

Die nichtlineare Interpolation ist vorzugsweise eine Approximation höherer Ordnung, insbesondere durch generalisierte Hough-Transformation.

Ein Abstand zwischen dem durch nichtlineare Interpolation erhaltenen Horizont des gerade befahrenen Fahrbahnstücks und einem durch die Montageposition und Kalibrierung der Kamera festgelegten Horizont kann verwendet werden, um die aktuelle Neigung des Kraftfahrzeugs zu ermitteln und/oder um die von Neigungssensoren und/oder Längsbeschleunigungsmessern im Kraftfahrzeug gelieferten Werte zu überprüfen oder zu verbessern.

Die Fahrbahnverlaufslinien repräsentieren in der Regel Fahrbahnmarkierungen, insbesondere Markierungen der Fahrbahnränder und/oder Spurbegrenzungen wie z.B. Mittellinien. Falls solche nicht vorhanden sind oder ergänzend dazu könnten Fahrbahnverlaufslinien auch aus anderen Begrenzungsmerkmalen wie z.B. Leitplanken, Bordsteinen usw. gewonnen werden.

Die Fahrbahnverlaufslinien sollten den in den Kamerabildern erkennbaren Fahrbahnverlauf im Wesentlichen kontinuierlich wiedergeben, jedenfalls bis zu einer Entfernung, die im Wesentlichen durch die Auflösung der Kamera und die Auffälligkeit der Fahrbahnlängsmarken begrenzt ist.

Die nach dem Verfahren berechnete relative Steigung kann dann zur Anpassung von Fahrstrategien, Fahrzeugparametern und/oder Fahrzeugeinstellungen an die Fahrbahnsteigung verwendet werden

Es folgt eine Beschreibung von Ausführungsbeispielen anhand der Zeichnungen. Darin zeigen:
- Fig. 1: ein Kamerabild einer vor einem Kraftfahrzeug liegenden geraden Straße auf einer Ebene;
- Fig. 2: die Situation von Fig. 1 von der Seite;
- Fig. 3: eine ähnliche Situation wie in Fig. 1 von der Seite, wenn die Straße vor dem Kraftfahrzeug ein Gefälle aufweist:
- Fig. 4: das Kamerabild einer vor einem Kraftfahrzeug liegenden geraden Straße mit in Fahrtrichtung zunehmendem Gefälle im Vergleich mit der Situation von Fig. 1;
- Fig. 5a: ein Beispiel für Fahrbahnverlaufslinien einer Linkskurve vor dem Kraftfahrzeug aus einer Vogelperspektive;
- Fig. 5b: eine dreidimensionale Darstellung der Fahrbahnverlaufslinien von Fig. 5a, wenn die Linkskurve in derselben Ebene verläuft wie das Fahrbahnstück unter dem Kraftfahrzeug;
- Fig. 5c: eine dreidimensionale Darstellung der Fahrbahnverlaufslinien von Fig. 5a, wenn die Linkskurve relativ zu dem Kraftfahrzeug ansteigt;
- Fig. 5d: ein schematisches Kamerabild der Fahrbahnverlaufslinien von Fig. 5b;
- Fig. 5e: ein schematisches Kamerabild der Fahrbahnverlaufslinien von Fig. 5c;
- Fig. 6: ein Beispiel für Fahrbahnverlaufslinien einer Rechtskurve vor dem Kraftfahrzeug, die ein zunehmendes Gefälle aufweist; und
- Fig. 7: ein Flussdiagramm eines Beispiels für ein Verfahren zum Ermitteln einer relativen Fahrbahnsteigung.

Moderne Kraftfahrzeuge sind immer häufiger mit Kamerasystemen zur Unterstützung von Sicherheitsanwendungen wie z.B. Abstandsregeltempomaten, Spurhalteassistenten oder anderen ausgestattet. Die mit diesen Kameras aufgenommenen Bilder werden üblicherweise ausgewertet, um definierte Datensätze für bestimmte Anwendungen bereitzustellen.

Für die vorliegende Anwendung werden geometrische Merkmale der Geometrie von Kamerabildern der Szenerie vor einem Kraftfahrzeug ausgewertet, in dem sich ein Abschnitt der in Kürze zu befahrenen Fahrbahn befindet.

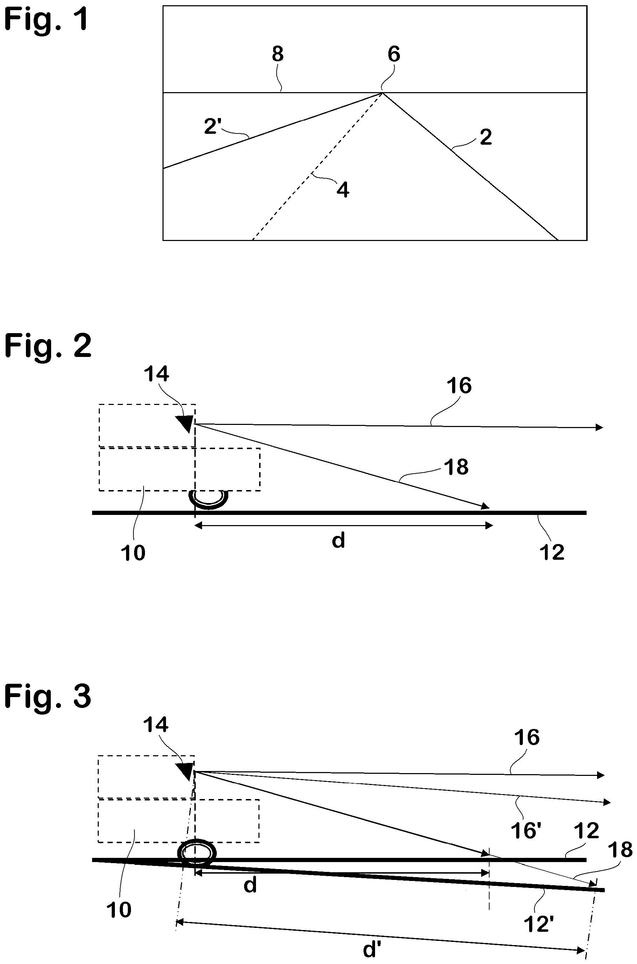

Wie in Fig. 1 gezeigt, ist eine gerade Straße auf einer Ebene typischerweise durch seitliche durchgezogene Fahrbahnmarkierungen 2, 2' und eine unterbrochene Mittellinie 4 charakterisiert, welche sich in einem Punkt 6 schneiden, der auf einer Horizontlinie 8 liegt, welche im Falle einer befahrenen Ebene mit dem Horizont in der realen Welt übereinstimmt.

Die Position der Horizontlinie 8 im Kamerabild hängt vom Lichtweg und von der Montageposition der Kamera ab. Die Horizontlinie 8 wird normalerweise nach der Montage der Kamera festgelegt und bleibt dann fest eingestellt.

Die in Fig. 1 gezeigte Situation ist in Fig. 2 von der Seite dargestellt. Ein Kraftfahrzeug 10 befährt eine gerade Straße 12 in einer Ebene von links nach rechts in der Figur. Eine z.B. hinter der Frontscheibe des Kraftfahrzeugs 10 angeordnete Kamera 14 blickt in Fahrtrichtung und sieht den Horizont der Straße, z.B. die Horizontlinie 8 in Fig. 1, in einer Blickrichtung 16, die im Wesentlichen parallel zur Straße 12 verläuft, je nach dem Straßenverlauf und wie weit dieser zu erkennen ist. Im Blickfeld der Kamera 14 befindet sich auch die vor dem Kraftfahrzeug 10 liegende Straße 12, wobei ein in einer endlichen Distanz d vor der Kamera 14 liegendes Straßenstück in einer Blickrichtung 18 gesehen wird, die von der Blickrichtung 16 verschieden ist, in welcher der Horizont gesehen wird.

Fig. 3 zeigt eine ähnliche Situation wie in Fig. 1 von der Seite, wenn die Straße 12 unmittelbar unter dem Kraftfahrzeug 10 noch eben ist, aber in Fahrtrichtung ein konstantes Gefälle aufweist, d. h. entlang einer Gefällestrecke 12' verläuft. In diesem Fall liegt der Horizont der Gefällestrecke 12' unter dem Horizont der ebenen Straße 12 und wird von der Kamera 14 in einer Blickrichtung 16' gesehen, die entsprechend dem Betrag des Gefälles verschieden ist von der Blickrichtung 16, in der die Horizontlinie 8 gesehen wird. In der Blickrichtung 18 der Kamera 14 befindet sich jetzt ein Straßenstück, das in einer Distanz d' vor der Kamera 14 liegt, die größer als die Distanz d von Fig. 1 ist.

Im Falle einer Steigung statt eines Gefälles, welches auch als negative Steigung zu bezeichnen ist, würde die Distanz eines an derselben Pixelposition des Bildsensors der Kamera 14 gesehenen Straßenstücks kleiner statt größer werden.

Der oben beschriebene Horizonteffekt ist von Effekten zu unterscheiden, die auf einer Neigung des Kraftfahrzeugs 10 beruhen, welche dynamisch durch Nickbewegungen oder statisch durch ungleichmäßige Beladung zustande kommen kann.

Da sich alle Fahrbahnverlaufslinien, z.B. die Fahrbahnmarkierungen 2, 2' und die Mittellinie 4 in Fig. 1, in einem Punkt schneiden, kann der Horizont des von der Kamera 14 beobachteten Fahrbahnstücks aus dem Kamerabild berechnet werden, indem die Fahrbahnverlaufslinien ausgehend vom Bildvordergrund linear interpoliert werden und eine Horizontale durch deren Schnittpunkt gezogen wird.

Zu diesem Zweck kann eine Geradenerkennung mittels Hough-Transformation oder Radon-Transformation durchgeführt werden, wie im Stand der Technik an sich bekannt, wenn die Fahrbahnverlaufslinien als Punktmengen gegeben sind, wie es bei digitalen Kamerabildern der Fall ist.

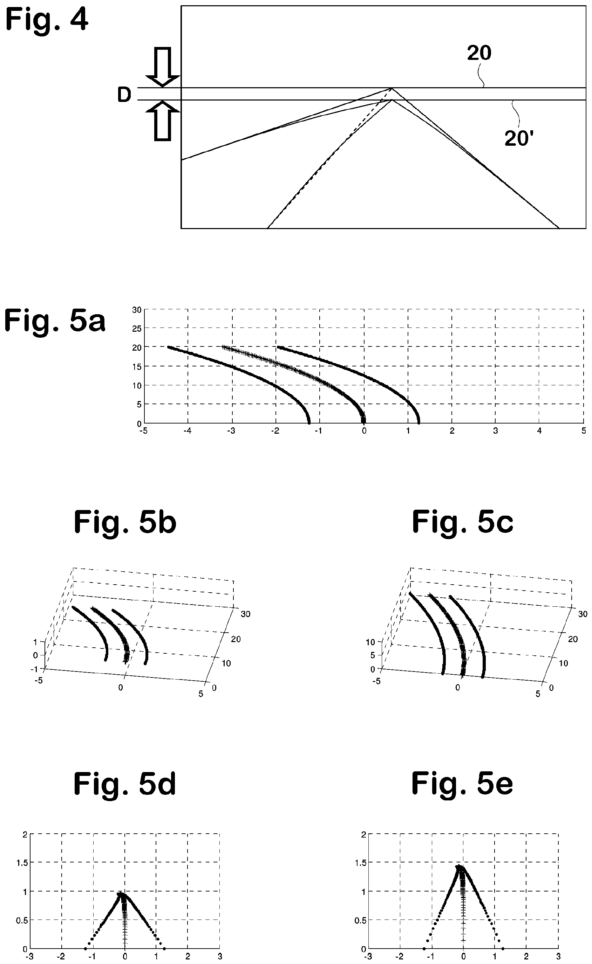

Im Falle einer geraden Straße auf einer Ebene sollte eine auf diese Weise gewonnene Horizontale 20 in Fig. 4 mit der voreingestellten Horizontlinie 8 in Fig. 1 übereinstimmen. In jedem Fall sind die Horizontale 20 und die Horizontlinie 8 auf das gerade von dem Kraftfahrzeug 10 befahrene Fahrbahnstück bezogen.

Im Falle einer geraden Straße mit in Fahrtrichtung zunehmendem Gefälle verlaufen die Fahrbahnverlaufslinien mit zunehmender Distanz von der Kamera 14 immer weniger gerade, sondern krümmen sich zunehmend, wie in Fig. 4 dargestellt, und sie schneiden sich in einem Punkt, der auf einer Horizontalen 20' liegt, die in einem Abstand D unter der Horizontalen 20 verläuft.

Auch in diesem Fall liefert lineare Interpolation bzw. Geradenerkennung die Horizontale 20 in Fig. 3, weil die näher an der Kamera 14 liegenden Abschnitte der Fahrbahnverlaufslinien nahezu gerade sind und vom Bildvordergrund ausgehend interpoliert werden.

Die Horizontale 20', an der die zunehmend gekrümmten Fahrbahnverlaufslinien zusammenlaufen, ist auf ein in einiger Entfernung vor dem Kraftfahrzeug 10 liegendes Fahrbahnstück bezogen, nämlich auf ein Fahrbahnstück, das noch in Erkennungsreichweite liegt, welche im Wesentlichen durch die Auflösung der Kamera 14 und die Auffälligkeit der Fahrbahnlängsmarken begrenzt ist. Diese Reichweite beträgt typischerweise einige 10 Meter, z.B. 20 Meter.

Der Punkt, an dem die zunehmend gekrümmten Fahrbahnverlaufslinien zusammenlaufen, und somit die Horizontale 20' kann durch nichtlineare Interpolation der gekrümmten Fahrbahnverlaufslinien bestimmt werden, z.B. durch generalisierte Hough-Transformation an den die Fahrbahnverlaufslinien repräsentierenden Punktmengen.

Der Abstand D zwischen den beiden Horizontalen 20 und 20' in Fig. 4 repräsentiert die relative Fahrbahnsteigung, d. h. die Differenz zwischen der Steigung des gerade befahrenen Fahrbahnstück und der Steigung des in einiger Entfernung liegenden Fahrbahnstücks.

Auf dieselbe Weise wie oben beschrieben erhält man die Horizontale 20' auch im Falle einer Fahrbahn, die eine Kurve bildet, wie sich aus dem Folgenden ergibt.

Fig. 5a zeigt Fahrbahnverlaufslinien eines Beispiels für einen kurvigen Fahrbahnabschnitt vor dem Kraftfahrzeug 10 aus der Vogelperspektive, wobei die Abszisse dem Abstand der Fahrbahnverlaufslinien bzw. der diese repräsentierenden Punktmengen von der Kamera 14 in Richtung der Breite des Kraftfahrzeugs 10 entspricht und wobei die gegenüber der Abszisse um einen Faktor 10 gestauchte Ordinate dem Abstand der Fahrbahnverlaufslinien bzw. der diese repräsentierenden Punktmengen von der Kamera 14 in Fahrtrichtung entspricht.

Fig. 5b ist eine dreidimensionale Darstellung der Fahrbahnverlaufslinien von Fig. 5a in dem Fall, dass der Fahrbahnabschnitt eine Linkskurve ist, die in derselben Ebene liegt wie das gerade von dem Kraftfahrzeug 10 befahrene Fahrbahnstück, während Fig. 5c eine dreidimensionale Darstellung der Fahrbahnverlaufslinien von Fig. 5a in dem Fall ist, dass der Fahrbahnabschnitt nicht nur nach links gekrümmt ist, sondern auch relativ zu dem davor liegenden Fahrbahnstück konstant ansteigt, d. h., dass sich das Kraftfahrzeug 10 unmittelbar am Beginn einer Steigung der Linkskurve befindet.

Fig. 5d zeigt die Fahrbahnverlaufslinien von Fig. 5b aus Sicht der Kamera 14, und Fig. 5e zeigt die Fahrbahnverlaufslinien von Fig. 5c aus Sicht der Kamera 14.

In Figuren 5d und 5e repräsentiert der Ordinatenwert 1 den durch die Montageposition und Kalibrierung der Kamera 14 gegebenen Horizont, welcher der Horizontlinie 8 in Fig. 1 bzw. der Horizontalen 20 in Fig. 3 entspricht.

Man erkennt, wenn man in Figuren 5d und 5e die Fahrbahnverlaufslinien nichtlinear interpoliert, treffen sie sich in Fig. 5d in einem Punkt, der auf dem voreingestellten Horizont liegt, wie bei es einer in einer Ebene liegenden Fahrbahn zu erwarten ist. Hingegen treffen sich in Fig. 5e die Fahrbahnverlaufslinien in einem Punkt, der auf einer horizontalen Linie durch den Ordinatenwert 1,5 liegt.

Die relative Steigung der wie in Fig. 5e von der Kamera 14 gesehenen Fahrbahnkurve in Bezug auf den voreingestellten Horizont ergibt sich unmittelbar aus dem Kamerabild. Und zwar ist die relative Steigung = (Ordinatenwert des nichtlinear interpolierten Horizonts - Ordinatenwert des voreingestellten Horizonts) / Ordinatenwert des voreingestellten Horizonts x 100% = (1,5 - 1)1 x 100% = 50%.

Man beachte, dass die so erhaltene relative Steigung nicht von irgendwelchen Entfernungen abhängt, welche aus Kamerabildern schwer oder nur sehr ungenau zu ermitteln sind, sondern nur von der Kamera-Geometrie. Der Abstand zwischen dem Horizont des gerade von dem Kraftfahrzeug 10 befahrenen Fahrbahnstücks und dem durch nicht lineare Interpolation der Fahrbahnverlaufslinien gewonnen Horizont der in einiger Entfernung vor einem Kraftfahrzeug 10 liegenden Fahrbahn ist ein lineares Maß für die relative Steigung in der realen Welt.

Während in dem Beispiel von Fig. 4 der Horizont des gerade von dem Kraftfahrzeug 10 befahrenen Fahrbahnstücks durch lineare Interpolation der Fahrbahnverlaufslinien gewonnen wurde, wurde in dem Beispiel von Fig. 5e der durch die Montageposition und Kalibrierung der Kamera 14 voreingestellte Horizont für die Berechnung der relativen Steigung verwendet. An sich kann jede der beiden Methoden verwendet werden, wobei jedoch die erstere bevorzugt wird.

Bei der Horizontberechnung durch lineare Interpolation ist jedoch zu beachten, dass diese möglicherweise nicht in jedem Fall die Steigung des gerade von dem Kraftfahrzeug befahrenen Fahrbahnstücks genau liefert. Zum Beispiel, wenn man in dem Beispiel von Fig. 5e die Fahrbahnverlaufslinien linear interpolieren würde, wie in dem Beispiel von Fig. 4, käme man zu einem falschen Wert der relativen Steigung. Dies liegt daran, dass die Figuren 5c und 5e einen eher praxisfernen Fall veranschaulichen, in dem die Fahrbahn unmittelbar vor dem Kraftfahrzeug 10 abrupt in eine extreme Steigung übergeht. Bei einem sanften Übergang zu einer realistischen Steigung würde auch eine lineare Interpolation der Fahrbahnverlaufslinien zu dem richtigen Horizont des gerade von dem Kraftfahrzeug 10 befahrenen Fahrbahnstücks führen und damit die richtige relative Steigung ergeben. Außerdem wird auch in Fällen wie in Figuren 5c und 5e der Horizont des gerade von dem Kraftfahrzeug 10 befahrenen Fahrbahnstücks jedenfalls dann richtig erkannt, kurz bevor das Kraftfahrzeug 10 die den Figuren 5c und 5e entsprechende Position erreicht.

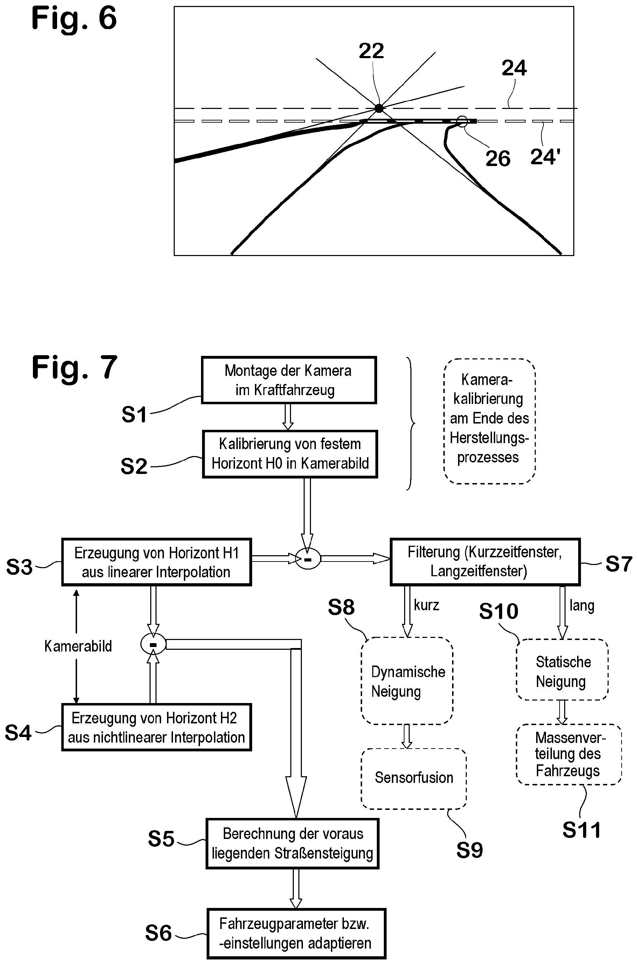

Fig. 6 zeigt noch ein Beispiel für eine Berechnung beider Horizonte durch lineare bzw. nichtlineare Interpolation der Fahrbahnverlaufslinien, nämlich anhand einer vor dem Kraftfahrzeug 10 liegenden Rechtskurve, die ein zunehmendes Gefälle aufweist. Wenn die als dicke Linien in Fig. 6 dargestellten Fahrbahnverlaufslinien linear interpoliert werden, treffen sie sich in einem Punkt 22, der auf einer Horizontalen 24 liegt, die dem Horizont des gerade von dem Kraftfahrzeug 10 befahrenen Fahrbahnstücks entspricht. Wenn die als dicke Linien dargestellten Fahrbahnverlaufslinien nichtlinear interpoliert werden, treffen sie sich in einem Punkt 26, der auf einer Horizontalen 24' liegt, die dem Horizont eines in einiger Entfernung vor einem Kraftfahrzeug 10 liegenden, noch von der Kamera 14 erfassten Fahrbahnstücks entspricht.

Die relative Steigung ist hier = (Ordinatenwert des nichtlinear interpolierten Horizonts 24' - Ordinatenwert des linear interpolierten Horizonts 24) / Ordinatenwert des linear interpolierten Horizonts 24. Konkret ergibt sich hier z.B. eine relative Steigung von -4%, was wegen des negativen Vorzeichens ein Gefälle ist.

Mit der so erhaltenen relativen Steigung können Fahrzeugparameter an den kommenden Fahrbahnverlauf angepasst werden. Zum Beispiel kann vorbereitet oder damit begonnen werden, durch regeneratives Bremsen Strom für die Fahrzeugbatterie zu gewinnen, einen anderen Gang einzulegen, den von einem Abstandsregeltempomaten gehaltenen Abstand zu einem vorausfahrenden Fahrzeug zu vergrößern, usw.

Horizontberechnungen einerseits durch lineare und andererseits durch nichtlineare Interpolation der Fahrbahnverlaufslinien in ein und demselben Kamerabild hat den Vorteil, dass die so erhaltene relative Steigung unabhängig von der aktuellen Neigung des Kraftfahrzeugs 10 aufgrund von Nickbewegungen oder ungleichmäßiger Beladung ist.

Hingegen wird der durch die Montageposition und Kalibrierung der Kamera 14 voreingestellte Horizont verschoben, wenn sich das Kraftfahrzeug 10 neigt. Diese Tatsache kann ausgenutzt werden, um im Rahmen des vorstehend beschriebenen Verfahrens aus den Kamerabildern auch die Neigung des Kraftfahrzeugs 10 zu ermitteln, wie nachfolgend beschrieben wird.

Vergleicht man den voreingestellten Horizont über eine längere Zeit oder Wegstrecke mit dem durch lineare Interpolation von Fahrbahnverlaufslinien ermittelten Horizont, so erhält man ein Maß für die Neigung des Kraftfahrzeugs 10 aufgrund von statischer Belastung.

Und vergleicht man den voreingestellten Horizont über kürzere Zeiten oder Wegstrecken mit dem durch lineare Interpolation von Fahrbahnverlaufslinien ermittelten Horizont, so erhält man ein Maß für die Neigung des Kraftfahrzeugs 10 aufgrund von dynamischen Nickbewegungen.

Diese aus den Kamerabildern gewonnenen Informationen über die Neigung des Kraftfahrzeugs 10 können dazu verwendet werden, die Messwerte eines Neigungssensors oder Längsbeschleunigungsmessers im Fahrzeug genauer zu machen, oder sie können in Ermangelung derartiger Sensoren direkt von irgendwelchen Einrichtungen im Kraftfahrzeug verwendet werden, welche die Neigung kennen müssen.

Fig. 7 zeigt ein Flussdiagramm eines Beispiels für ein Verfahren zum Ermitteln einer relativen Fahrbahnsteigung. Gegen Ende des Herstellungsprozesses eines Kraftfahrzeugs wird eine Kamera montiert, beispielsweise hinter der Frontscheibe (Schritt S1), und es wird ein fester Horizont H0 kalibriert (Schritt S2).

Während das Kraftfahrzeug später fährt, wird im Schritt S3 ein Horizont H1 durch lineare Interpolation der in einem Kamerabild erkannten Fahrbahnverlaufslinien ermittelt, und im Schritt S4 wird ein Horizont H2 durch nichtlineare Interpolation der Fahrbahnverlaufslinien ermittelt, wie oben beschrieben.

Aus dem Abstand der beiden Horizonte H1 und H2 voneinander wird im Schritt S5 die Steigung der vor dem Kraftfahrzeug liegenden Fahrbahn in Bezug auf das gerade von dem Kraftfahrzeug befahrene Fahrbahnstück berechnet. Optional kann auch die absolute Steigung der voraus liegenden Fahrbahn berechnet werden, wenn die absolute Steigung des gerade befahrenen Fahrbahnstücks bekannt ist, z.B. aus Kartendaten und/oder irgendeiner Sensorfusion.

Wenn sich im Schritt S4 eine Steigungsänderung ergibt, werden im Schritt S6 Fahrzeugparameter bzw. Fahrzeugeinstellungen adaptiert, wie oben beschrieben.

Außerdem kann die Differenz zwischen dem im Schritt S2 kalibrierten festen Horizont H0 und dem im Schritt S3 durch lineare Interpolation von Fahrbahnverlaufslinien ermittelten Horizont H1 im Schritt S7 sowohl kurzzeit- als auch langzeitgefiltert werden.

Anhand von kurzzeitigen Differenzen der beiden Horizonte H0 und H1 kann in einem Schritt S8 die dynamische Neigung des Fahrzeug während Manövern ermittelt werden und ggf. im Schritt S9 mit Signalen eines Neigungssensors und/oder Längsbeschleunigungsmessers fusioniert werden.

Anhand von langzeitigen Differenzen der beiden Horizonte H0 und H1 kann im Schritt S10 die statische Neigung des Fahrzeug aufgrund der aktuellen Beladung ermittelt werden, und im Schritt S11 kann daraus die Massenverteilung des Fahrzeugs ermittelt werden.

## Patentansprüche

1. Verfahren zum Ermitteln der Steigung einer in einiger Entfernung vor einem Kraftfahrzeug (10) liegenden Fahrbahn relativ zu dem gerade von dem Kraftfahrzeug (10) befahrenen Fahrbahnstück, wobei Bilder der vor dem Kraftfahrzeug (10) liegenden Fahrbahn mittels einer Kamera (14) aufgenommen werden, in den aufgenommenen Bildern Fahrbahnverlaufslinien (2, 2', 4) vor dem Kraftfahrzeug (10) erkannt werden und anhand von Richtungsunterschieden der Fahrbahnverlaufslinien in unterschiedlichen Entfernungen die relative Steigung berechnet wird,
**dadurch gekennzeichnet, dass**
die Fahrbahnverlaufslinien (2, 2', 4) jeweils in ihrer Gesamtheit nichtlinear zu einem Horizont (20', 24') der in einiger Entfernung vor dem Kraftfahrzeug (10) liegenden Fahrbahn interpoliert werden, der Abstand zwischen dem so erhaltenen Horizont (20', 24') des Fahrbahnverlaufs und einem Horizont des gerade befahrenen Fahrbahnstücks (20, 24) berechnet wird und aus dem Abstand (D) der beiden Horizonte voneinander die relative Steigung berechnet wird.

2. Verfahren nach Anspruch 1,
**dadurch gekennzeichnet, dass**
der Horizont (20, 24) des gerade befahrenen Fahrbahnstücks erhalten wird, indem die Fahrbahnverlaufslinien (2, 2', 4) linear interpoliert werden.

3. Verfahren nach Anspruch 2,
**dadurch gekennzeichnet, dass**
die lineare Interpolation der Fahrbahnverlaufslinien (2, 2', 4) eine Geradenerkennung mittels Hough-Transformation oder Radon-Transformation ist.

4. Verfahren nach Anspruch 1,
**dadurch gekennzeichnet, dass**
der Horizont (20, 24) des gerade befahrenen Fahrbahnstücks ein durch die Montageposition und Kalibrierung der Kamera (14) festgelegter Horizont ist.

5. Verfahren nach einem der vorhergehenden Ansprüche,
**dadurch gekennzeichnet, dass**
die nichtlineare Interpolation eine Approximation höherer Ordnung ist, insbesondere durch generalisierte Hough-Transformation.

6. Verfahren nach einem der vorhergehenden Ansprüche,
**dadurch gekennzeichnet, dass**
ein Abstand zwischen dem durch nichtlineare Interpolation erhaltenen Horizont (20', 24') des gerade befahrenen Fahrbahnstücks und einem durch die Montageposition und Kalibrierung der Kamera festgelegten Horizont verwendet wird, um die aktuelle Neigung des Kraftfahrzeugs (10) zu ermitteln.

7. Verfahren nach einem der vorhergehenden Ansprüche,
**dadurch gekennzeichnet, dass**
die Fahrbahnverlaufslinien (2, 2', 4) Fahrbahnmarkierungen repräsentieren, insbesondere Markierungen der Fahrbahnränder und/oder Spurbegrenzungen.

8. Verfahren nach einem der vorhergehenden Ansprüche,
**dadurch gekennzeichnet, dass**
die Fahrbahnverlaufslinien (2, 2', 4) den in den Kamerabildern erkennbaren Fahrbahnverlauf im Wesentlichen kontinuierlich wiedergeben.

9. Vorrichtung zum Ermitteln der Steigung einer in einiger Entfernung vor einem Kraftfahrzeug (10) liegenden Fahrbahn relativ zu dem gerade von dem Kraftfahrzeug (10) befahrenen Fahrbahnstück in von einer Kamera (14) aufgenommenen Bildern der vordem Kraftfahrzeug (10) liegenden Fahrbahn,
**dadurch gekennzeichnet, dass**
die Vorrichtung zur Durchführung des Verfahrens nach einem der vorhergehenden Ansprüche eingerichtet ist.

## Claims

1. Method for determining the incline of a road that is some distance ahead of a motor vehicle (10) relative to the section of road that is currently being driven on by the motor vehicle (10), wherein images of the road that is ahead of the motor vehicle (10) are recorded by means of a camera (14), road path lines (2, 2', 4) are identified in the images that are recorded ahead of the motor vehicle (10) and the relative incline is calculated with reference to the differences in the courses of the road path lines at different distances,
**characterized in that**
the road path lines (2, 2', 4) in each case are interpolated in their entirety in a non-linear manner to a horizon (20' 24') of the road that is some distance ahead of the motor vehicle (10), the distance between the horizon (20', 24') of the road path that is obtained in this manner and a horizon of the section of road (20, 24) that is currently being driven on is calculated and the relative incline is calculated from the distance (D) of the two horizons from one another.

2. Method according to Claim 1,
**characterized in that**
the horizon (20, 24) of the section of road that is currently being driven on is obtained, wherein the road path lines (2, 2', 4) are interpolated in a linear manner.

3. Method according to Claim 2,
**characterized in that**
the linear interpolation of the road path lines (2, 2', 4) is an identification of a straight line by means of the Hough transform technique or Radon transform technique.

4. Method according to Claim 1,
**characterized in that**
the horizon (20, 24) of the section of road that is currently being driven on is a horizon that is established by means of the mounted position and calibration of the camera (14).

5. Method according to any one of the preceding claims,
**characterized in that**
the non-linear interpolation is an approximation of a higher order, in particular by means of the generalized Hough transform technique.

6. Method according to any one of the preceding claims,
**characterized in that**
a distance between the horizon (20', 24') of the section of road that is currently being driven on, said horizon being obtained by means of non-linear interpolation, and a horizon that is established by means of the mounted position and calibration of the camera, is used in order to determine the prevailing pitch of the motor vehicle (10).

7. Method according to any one of the preceding claims,
**characterized in that**
the road path lines (2, 2', 4) represent road markings, in particular markings of the road edges and/or lane demarcations.

8. Method according to any one of the preceding claims,
**characterized in that**
the road path lines (2, 2', 4) essentially continuously reproduce the road path that can be identified in the camera images.

9. Device for determining the incline of a road that is some distance ahead of a motor vehicle (10) relative to the section of road that is currently being driven on by the motor vehicle (10) in images of the road that is ahead of the motor vehicle (10), said images being recorded by a camera (14),
**characterized in that**
the device is designed for implementing the method according to any one of the preceding claims

## Revendications

1. Procédé de détermination de la pente d'une chaussée à une certaine distance en avant d'un véhicule automobile (10) par rapport à la partie de la chaussée parcourue à ce moment par le véhicule automobile (10), dans lequel
des images de la chaussée située en avant du véhicule automobile (10) sont enregistrées au moyen d'une caméra (14),
des lignes (2, 2', 4) d'évolution de la chaussée en avant du véhicule automobile (10) sont détectées dans les images enregistrées et la pente relative est calculée à l'aide des différences de direction des lignes d'évolution de la chaussée à différentes distance,
**caractérisé en ce que**
les lignes (2, 2', 4) d'évolution de la chaussée sont interpolées dans leur globalité de manière non linéaire par rapport à un horizon (20', 24') de la chaussée situé à une certaine distance en avant du véhicule automobile (10),
**en ce que** la distance ainsi obtenue entre l'horizon (20', 24') de l'évolution de la chaussée et un horizon de la partie de la chaussée (20, 24) qui vient d'être parcourue est calculée et
**en ce que** la pente relative est calculée à partir de la distance (D) entre les deux horizons.

2. Procédé selon la revendication 1, **caractérisé en ce que** l'horizon (20, 24) de la partie de la chaussée qui vient d'être parcourue est obtenu en interpolant linéairement les lignes (2, 2', 4) d'évolution de la chaussée.

3. Procédé selon la revendication 2, **caractérisé en ce que** l'interpolation linéaire des lignes (2, 2', 4) d'évolution de la chaussée est une reconnaissance de droites par transformation de Hough ou transformation de Radon.

4. Procédé selon la revendication 1, **caractérisé en ce que** l'horizon (20, 24) de la partie de la chaussée qui vient d'être parcourue est un horizon défini par la position de montage et l'étalonnage de la caméra (14).

5. Procédé selon l'une des revendications précédentes, **caractérisé en ce que** l'interpolation non linéaire est une approximation d'ordre plus élevé, en particulier par transformation de Hough généralisée.

6. Procédé selon l'une des revendications précédentes, **caractérisé en ce que** la distance entre l'horizon (20', 24') obtenu par interpolation non linéaire entre la partie de la chaussée qui vient d'être parcourue et un horizon défini par la position de montage et l'étalonnage de la caméra est utilisée pour déterminer l'inclinaison effective du véhicule (10) .

7. Procédé selon l'une des revendications précédentes, **caractérisé en ce que** les lignes (2, 2', 4) d'évolution de la chaussée représentent des marquages apportés sur la chaussée, en particulier des marquages des bords de la chaussée et/ou des limites de bande de circulation.

8. Procédé selon l'une des revendications précédentes, **caractérisé en ce que** les lignes (2, 2', 4) d'évolution de la chaussée reproduisent essentiellement en continu l'évolution de la chaussée détectée dans les images de la caméra.

9. Ensemble de détermination de la pente d'une chaussée située à une certaine distance en avant d'un véhicule automobile (10) par rapport à la partie de la chaussée qui vient être parcourue par le véhicule automobile (10), dans des images enregistrées par une caméra (14) de la chaussée située en avant du véhicule (10),
**caractérisé en ce que**
l'ensemble est conçu pour mettre en oeuvre le procédé selon l'une des revendications précédentes.
